# EUROPÄISCHE PATENTSCHRIFT

(11) **EP 4 248 125 B1**
(45) Veröffentlichungstag und Bekanntmachung des Hinweises auf die Patenterteilung: **17.09.2025**
(21) Anmeldenummer: 21819059.3
(22) Anmeldetag: 18.11.2021
(51) Int. Cl.: F17C 13/04, F17C 7/00

(54) **VERFAHREN ZUM BETREIBEN EINER MIT GASFÖRMIGEM BRENNSTOFF BETRIEBENEN ANTRIEBSEINHEIT**
METHOD FOR OPERATING A DRIVE UNIT OPERATED WITH GASEOUS FUEL
PROCÉDÉ POUR FAIRE FONCTIONNER UNE UNITÉ D'ENTRAÎNEMENT FONCTIONNANT AVEC DU COMBUSTIBLE GAZEUX

(30) Priorität: 23.11.2020 DE 102020214697
(43) Veröffentlichungstag der Anmeldung: 27.09.2023
(73) Patentinhaber: Robert Bosch GmbH, 70442 Stuttgart (DE)
(72) Erfinder: KEMMER, Helerson, 71665 Vaihingen (DE); WEEBER, Kai, 71296 Heimsheim (DE); SCHULTE MOENTING, Martin, 70499 Stuttgart (DE)
(86) Internationale Anmeldenummer: PCT/EP2021/082087
(87) Internationale Veröffentlichungsnummer: WO 2022/106511

(56) Entgegenhaltungen:
- DE-A1- 102016 220 259
- US-A1- 2006 118 175
- US-B2- 9 442 495

## Beschreibung

Die Erfindung betrifft ein Verfahren zum Betreiben einer mit gasförmigem Brennstoff betriebenen Antriebseinheit, beispielsweise einer mit gasförmigem Brennstoff betriebenen Verbrennungskraftmaschine oder einer mit gasförmigem Brennstoff betriebenen Brennstoffzelle, wie sie beispielsweise Verwendung findet, um in Fahrzeugen eingesetzt zu werden.

### Stand der Technik

Mit gasförmigem Brennstoff betriebene Antriebseinheiten sind aus dem Stand der Technik bekannt. Beispielsweise können beispielsweise in Form von Brennkraftmaschinen bekannt, die mit gasförmigem Kraftstoff statt mit flüssigem Brennstoff betrieben werden, insbesondere mit Wasserstoff oder mit Erdgas. Darüber hinaus sind andere Antriebseinheiten bekannt, die mit gasförmigen Brennstoff betrieben werden, beispielsweise Brennstoffzellen, die aus dem gasförmigen Brennstoff Strom erzeugen, mit dem elektrische Motoren angetrieben werden können. Die mit gasförmigem Brennstoff betriebenen Brennkraftmaschinen und die Brennstoffzellen mit einer Elektromotoreinheit können verwendet werden, um Personenkraftwagen oder Lastkraftwagen anzutreiben oder auch in stationären Antriebseinheiten, etwa Generatoren. Da gasförmiger Brennstoff bei Normaldruck nur eine geringe Energiedichte pro Volumen aufweist, wird dieser entweder stark gekühlt und dadurch verflüssigt oder er wird auf Drücke von mehreren 100 bar verdichtet und in entsprechenden Druckbehältern gespeichert. In einem Fahrzeug werden dabei meist mehrere Drucktanks verwendet, was verschiedene Vorteile aufweist. Zum einen können relativ kleine Drucktanks, beispielsweise zylindrische Gasflaschen, mit verhältnismäßig geringer Wandstärke gefertigt werden, während bei großen Gastanks deutlich größere Wandstärken und weitere Stabilisierungselemente notwendig sind. Zum anderen lassen sich kleine Drucktanks einfacher in einem Fahrzeug anordnen und nutzen damit den gegebene Bauraum besser aus. Eine solche Anordnung ist beispielsweise aus der DE 10 2017 212 485 A1 bekannt.

Die DE 10 2016 220259 A1 zeigt ein Verfahren zum Betrieb einer Tankanlage, umfassend eine Anzahl von mindestens zwei parallel geschalteten Tanks, welche einen gasförmigen Stoff enthalten, und in welchen ein Innendruck herrscht, zur Versorgung einer Verbrauchereinheit, welche maximal eine Volllastmenge des gasförmigen Stoffs benötigt, wobei jeder Tank ein Sicherheitsventil aufweist, welches den Tank abschaltet, wenn eine Durchflussmenge des gasförmigen Stoffs durch das Sicherheitsventil eine Abschaltmenge überschreitet, wobei wenn der Innendruck in mindestens einem Tank einen ersten Schwellwert unterschreitet, mindestens ein anderer Tank zugeschaltet wird, welcher zuvor abgeschaltet war.

Zur Versorgung der mit dem gasförmigen Brennstoff betriebenen Antriebseinheit ist ein gewisser Gasdruck erforderlich. Gerade bei hoher Last der Antriebseinheit muss in kurzer Zeit sehr viel gasförmiger Brennstoff zugeführt werden, was nur mit einem gewissen Mindestdruck gelingt. Sind die Gastanks in Folge eines längeren Betriebs bereits teilweise entleert, so kann es vorkommen, dass der noch zur Verfügung stehende Gasdruck nicht mehr ausreicht, der Brennkraftmaschine oder der sonstigen mit dem gasförmigen Brennstoff betriebene Antriebseinheit auch bei sehr hoher Last ausreichend Kraftstoff zuzuführen, so dass die Maximallast nicht mehr abgerufen werden kann.

### Offenbarung der Erfindung

### Vorteile der Erfindung

Das erfindungsgemäße Verfahren zum Betreiben einer mit gasförmigem Brennstoff betriebenen Antriebseinheit weist den Vorteil auf, dass auch nach längerem Betrieb der Antriebseinheit die volle Last, bei der viel gasförmiger Brennstoff in kurzer Zeit benötigt wird, abrufbar ist. Bei dem Verfahren wird der gasförmige Brennstoff unter hohem Druck in einer Vielzahl von Drucktanks bereitgestellt, die über eine Versorgungsleitung mit einem Dosierventil verbindbar sind, über das der gasförmige Brennstoff an die Antriebseinheit abgegeben werden kann. Dabei ist einer der Drucktanks als Hochlastdrucktank ausgebildet, der nur bei hoher Last der Antriebseinheit mit der Versorgungsleitung verbunden wird, wobei gleichzeitig die Drucktanks, in denen ein niedrigerer Gasdruck als im Hochlastdrucktank herrscht, von der Versorgungsleitung getrennt werden.

Die Drucktanks werden beispielsweise mit Wasserstoff unter einem Druck von anfangs 700 bar (70 MPa) befüllt. Durch das Betreiben der Antriebseinheit wird der gasförmige Brennstoff nach und nach verbraucht und entsprechend sinkt der Druck in den Drucktanks ab. Werden alle Drucktanks gleichmäßig entleert, so sinkt der Druck auch in allen Drucktanks ab, bis dieser einen kritischen Wert unterschreitet. Wird nun die Antriebseinheit unter Volllast betrieben, was bei einer Brennkraftmaschine mit einer hohen Drehzahl einhergeht, so wird sehr viel gasförmiger Kraftstoff in kurzer Zeit benötigt, der die in die entsprechenden Brennräume der Brennkraftmaschine eingebracht werden muss. Stellen die Drucktanks den dafür notwendigen Druck nicht mehr zur Verfügung, so kann die maximale Leistung der Antriebseinheit nicht mehr abgerufen werden.

Erfindungsgemäß wird deshalb vorgeschlagen, einen oder mehrere Drucktanks als Hochlastdrucktank zu betreiben und nur dann mit der Versorgungsleitung zu verbinden, wenn die Antriebseinheit unter Volllast oder unter hoher Last betrieben werden soll. Die übrigen Drucktanks, in denen ein niedrigerer Druck herrscht, werden bei Volllast von der Versorgungsleitung getrennt. Wird anschließend wieder eine niedrigere Leistung der Antriebseinheit abgerufen, so werden die Hochlastdrucktanks (oder der Hochlastdrucktank) wieder von der Versorgungsleitung getrennt und die übrigen Drucktanks mit der Versorgungsleitung verbunden, da für diese Betriebspunkte ein niedrigerer Gasdruck ausreicht. Auf diese Weise steht auch bei bereits teilweise entleerten Drucktanks stets ein ausreichend hoher Gasdruck zur Verfügung, der benötigt wird, um die maximale Leistung der Antriebseinheit ohne weitere bauliche Maßnahmen, beispielsweise einen zwischengeschalteten Verdichter, abrufen zu können.

In einer Weiterbildung des erfindungsgemäßen Verfahrens wird der Hochlastdrucktank nur dann mit der Versorgungsleitung verbunden, wenn der Gasdruck in den restlichen Drucktanks für die Versorgung der Antriebseinheit bei hoher Last nicht mehr ausreichend ist. Dadurch wird sichergestellt, dass der Hochlastdrucktank möglichst lange seinen vollen Gasdruck aufrecht erhält und damit für die Realisierung von Höchstlastsituationen der Antriebseinheit zur Verfügung steht.

In einer Weiterbildung des erfindungsgemäßen Verfahrens ist jeder der Drucktanks mit der Versorgungsleitung über eine Anschlussleitung verbindbar, wobei in jeder Anschlussleitung ein Absperrventil angeordnet ist. Die Absperrventile, die vorzugsweise elektrisch steuerbar sind, erlauben, jeden Drucktank einzeln mit der Versorgungsleitung zu verbinden oder von der Versorgungsleitung zu trennen. Dies ist auch unter Sicherheitsaspekten wünschenswert, um bei einem Defekt eines Drucktanks die entsprechende Verbindung unterbrechen zu können. Durch die freie Ansteuerbarkeit der Absperrventile lässt sich einer oder lassen sich mehrere der Drucktanks als Hochlastdrucktank betreiben, das heißt, dass diese Drucktanks nur bei einer Maximal- oder Volllast der Antriebseinheit verwendet werden, während die übrigen Drucktanks für den Normalbetrieb vorgesehen sind.

In einer Weiterbildung des erfindungsgemäßen Verfahrens sind mehrere Hochlastdrucktanks vorhanden, von denen wenigstens einer unter hoher Last der Antriebseinheit mit der Versorgungsleitung verbunden wird. Sind beispielsweise zwei der Drucktanks als Hochlastdrucktank vorgesehen, so kann im Falle einer Volllast der Antriebseinheit zuerst nur einer der Hochlastdrucktanks mit der Versorgungsleitung verbunden werden. Nach dem Erschöpfen des Gasvorrats in diesem Hochlastdrucktank übernimmt der zweite Hochlastdrucktank diese Aufgabe. Dadurch kann über einen längeren Zeitraum ein hohes Druckniveau in den Hochlastdrucktanks aufrechterhalten werden, das der Antriebseinheit zur Verfügung steht. Alternativ kann auch vorgesehen sein, dass stets alle Hochlastdrucktanks gemeinsam mit der Versorgungsleitung verbunden werden.

Sind mehrere Hochlastdrucktanks vorgesehen und wird jeweils nur einer mit der Versorgungsleitung verbunden, so wird nur einer der Hochlastdrucktanks bei Volllast der Antriebseinheit entleert, so lange, bis in diesen Hochlastdrucktanks der gleiche Gasdruck herrscht, wie in den restlichen Drucktanks, die bei normaler Betriebslast der Antriebseinheit eingesetzt werden.

In vorteilhafter Weiterbildung des Verfahrens ist die mit gasförmigem Brennstoff betriebene Antriebseinheit ein Verbrennungsmotor oder eine Brennstoffzelle mit einem durch die Brennstoffzelle mit Strom versorgten Elektromotor. In beiden Fällen ist gasförmiger Brennstoff unter einem bestimmten Druck erforderlich, um die Funktion aufrecht zu erhalten, so dass durch das erfindungsgemäße Verfahren ein dauerhafter Betrieb und eine optimale Ausnutzung des vorhandenen gasförmigen Brennstoffs in den Drucktanks sichergestellt ist.

In Weiterbildung des erfindungsgemäßen Verfahrens ist in der Versorgungsleitung zwischen den Drucktanks und dem Dosierventil ein Druckminderer angeordnet. Dieser sorgt für einen optimalen Gasdruck zum Betreiben des Dosierventils, je nach Betriebspunkt der Antriebseinheit. Sinkt der Druck in den Drucktanks zu weit ab, so kann der Druckminderer auch deaktiviert werden, so dass der volle Druck der Drucktanks am Dosierventil zur Verfügung steht.

In Weiterbildung des erfindungsgemäßen Verfahrens sind mehrere Dosierventile vorgesehen und an die Versorgungsleitung angeschlossen, um beispielsweise mehrere Zylinder einer Brennkraftmaschine mit gasförmigem Brennstoff zu versorgen oder auch mehrere Brennstoffzellen.

### Zeichnung

In der Zeichnung sind verschiedene Ausführungsbeispiele von Vorrichtungen dargestellt, die mit dem erfindungsgemäßen Verfahren betrieben werden können. Es zeigt
- Figur 1: eine Antriebseinheit, die mit gasförmigem Brennstoff betrieben wird, dargestellt in schematischer Darstellung zusammen mit einer Drucktankanordnung zur Versorgung dieser Antriebseinheit,
- Figur 2: ein weiteres Ausführungsbeispiel einer Drucktankanordnung mit alternativer Verschaltung der einzelnen Drucktanks und
- Figur 3: ein Flussdiagramm zur Illustration des erfindungsgemäßen Verfahrens.

### Beschreibung der Ausführungsbeispiele

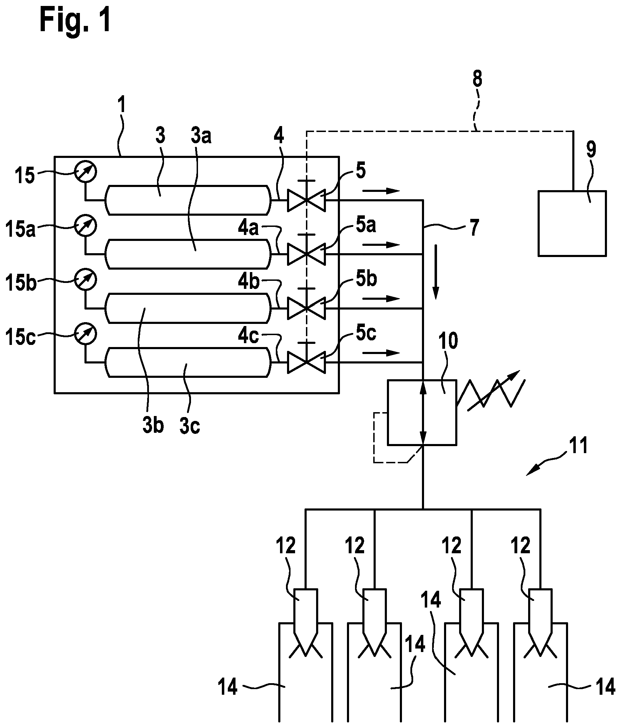

Zur Erläuterung des erfindungsgemäßen Verfahrens ist in **Figur 1** eine Antriebseinheit schematisch dargestellt, die mit gasförmigem Brennstoff betrieben wird. Die Antriebseinheit 11 ist hier als Verbrennungsmotor ausgebildet und umfasst vier Brennräume 14, in die jeweils ein Dosierventil 12 mündet. Über das Dosierventil 12 kann gasförmiger Brennstoff in den jeweiligen Brennraum 14 eindosiert werden, wo der gasförmige Kraftstoff verbrennt und in bekannter Weise jeweils einen Kolben bewegt. Zur Versorgung der Antriebseinheit 11 mit gasförmigem Kraftstoff ist eine Drucktankanordnung 1 vorgesehen. Die Drucktankanordnung 1 umfasst mehrere Drucktanks 3, 3a, 3b, 3c, von denen der Drucktank 3 als Hochlastdrucktank 3 verwendet wird, wobei sich der Hochlastdrucktank 3 ansonsten baulich nicht von den übrigen Drucktanks 3a, 3b und 3c unterscheidet. Die Drucktanks 3, 3a, 3b, 3c sind im Wesentlichen in Form von zylindrischen Hochdruckgasbehältern ausgebildet, wobei der Gasdruck innerhalb der Drucktanks 3, 3a, 3b, 3c durch jeweils einen Drucksensor 15, 15a, 15b, 15c gemessen wird, die ihre Messwerte in ein Steuergerät 9 übertragen, das in der **Figur 1** schematisch eingezeichnet ist.

Zur Versorgung der Antriebseinheit 11 mit dem gasförmigen Brennstoff sind alle Drucktanks 3, 3a, 3b, 3c über Anschlussleitungen 4, 4a 4b, 4c mit einer Versorgungsleitung 7 verbunden, die sich zu den einzelnen Dosierventilen 12 hin verzweigt. In den Anschlussleitungen 4, 4a, 4b, 4c ist jeweils ein Absperrventil 5, 5a, 5b, 5c angeordnet, die elektrisch ansteuerbar sind und über eine elektrische Anschlussleitung 8 mit dem Steuergerät 9 verbunden sind. Damit lassen sich die einzelnen Absperrventile 5, 5a, 5b, 5c unabhängig voneinander öffnen und schließen. In der Versorgungsleitung 7 ist ein Druckminderer 10 angeordnet, durch den der erforderliche Gasdruck des gasförmigen Brennstoffs an den Dosierventilen einstellbar ist, falls der aus den Drucktanks gelieferte gasförmige Brennstoff einen zu hohen Gasdruck aufweist.

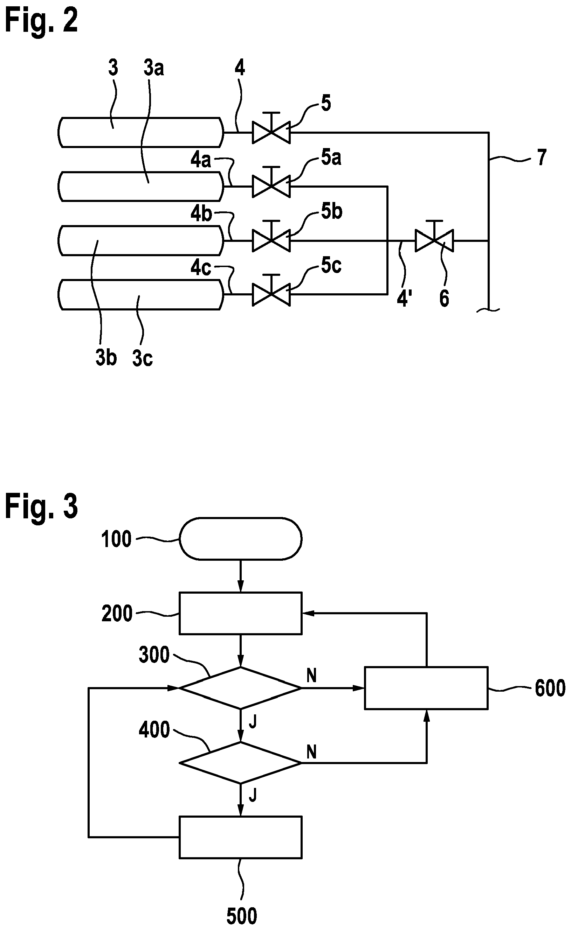

Das erfindungsgemäße Verfahren zum Betreiben der Antriebseinheit und zur Versorgung der Antriebseinheit mit gasförmigem Brennstoff wird anhand des Flussdiagramms der **Figur 3** näher erläutert. In einem ersten Schritt 100 wird die Antriebseinheit in Betrieb genommen, also beispielsweise die Brennkraftmaschine gestartet. Dabei wird in einem zweiten Schritt 200 das Absperrventil wenigstens eines Drucktanks 3a, 3b, 3c geöffnet, in der Regel - bei einem normalen Lastzustand der Brennkraftmaschine - eines der Absperrventile 5a, 5b, 5c, während das Absperrventil 5 des Hochlastdrucktanks 3 geschlossen bleibt.

In einem nächsten Schritt 300 wird überprüft, ob der Druckschwellwert der Drucktanks 3a, 3b, 3c unter einen vorgegebenen Schwellwert gesunken ist, bei dem die Versorgung der Antriebseinheit 11 bei Höchstlast nicht mehr gewährleistet ist. Dies geschieht anhand des Drucks, den die einzelnen Drucksensoren 15a, 15b, 15c messen und dem Steuergerät 9 übermitteln. Ist der Druck in den Drucktanks 3a, 3b, 3c ausreichend (Zweig "N"), so bleibt das Absperrventil 5 geschlossen (Schritt 600) und die Absperrventile 5a, 5b, 5c bleiben geöffnet, so dass die Antriebseinheit, hier der Verbrennungsmotor, weiterhin mit dem gasförmigen Brennstoff aus den Drucktanks 3a, 3b, 3c versorgt wird. Sollte der Druck in den Drucktanks 3a, 3b, 3c jedoch unter einen Schwellwert fallen (Zweig "J"), so wird im folgenden Schritt 400 überprüft, ob die Antriebseinheit 11 in einem Hochlastzustand ist. Wenn nicht (Zweig "N"), bleiben die Absperrventile 5a, 5b, 5c geöffnet und das Absperrventil 5 geschlossen. Falls ja (Zweig "J"), werden in einem Schritt 500 die Absperrventile 5a, 5b, 5c geschlossen und das Absperrventil 5 geöffnet, so dass nunmehr gasförmiger Brennstoff unter hohem Druck aus dem Hochlastdrucktank 3 in die Versorgungsleitung 7 strömt und von dort zu den Dosierventilen 12. Der Druckminderer 10 kommt nur dann zum Einsatz, wenn der Gasdruck zu hoch sein sollte. Anschließend werden die Verfahrensschritte Prüfen des Druckschwellwerts in den Drucktanks 3a, 3b, 3c im Schritt 300 und die nachfolgenden Schritte erneut durchlaufen, bis durch das Steuergerät erkannt wird, dass keine Voll- oder Höchstlast der Antriebseinheit 11 mehr vorliegt. Wenn dies festgestellt wird, wird in einem Schritt 600 das Absperrventil 5 des Hochlastdrucktanks geschlossen und die Absperrventile 5a, 5b, 5c der Drucktanks 3a, 3b, 3c wieder geöffnet.

**Figur 2** zeigt eine alternative Verschaltung der Drucktanks 3a, 3b, 3c. Statt jede Anschlussleitung 4a, 4b, 4c mit einem Absperrventil 5a, 5b, 5c mit der Versorgungsleitung direkt zu verbinden, münden hier Anschlussleitungen 4a, 4b, 4c in eine weitere Anschlussleitung 4', in der ein Normalabsperrventil 6 angeordnet ist. In diesem Fall kann die Verbindung der Drucktanks 3a, 3b, 3c zur Versorgungsleitung 7 durch das Normalabsperrventil 6 unterbrochen werden, während die Absperrventile 5a, 5b, 5c auch im Volllastfall ständig geöffnet bleiben.

In der hier gezeigten Drucktankanordnung 1 sind vier Drucktanks 3, 3a, 3b, 3c vorgesehen, von denen einer als Hochlastdrucktank 3 ausgebildet ist. Dabei muss er sich baulich nicht von den übrigen Drucktanks 3a, 3b, 3c unterscheiden, sondern er wird nur durch seine Verwendung zu einem Hochlastdrucktank, der bei Volllast die Versorgung der Antriebseinheit übernimmt. Es kann auch vorgesehen sein, eine größere Anzahl von Drucktanks zu verwenden und mehr als einen der Drucktanks als Hochlastdrucktank zu betreiben. Sind beispielsweise zwei Drucktanks als Hochlastdrucktank vorgesehen, so kann zuerst einer der Hochlastdrucktanks die Aufgabe übernehmen, bei Volllast der Antriebseinheit den notwendigen gasförmigen Brennstoffdruck zur Verfügung zu stellen, so lange, bis das Druckniveau in diesem Hochlastdrucktank nicht mehr ausreicht. Dann kann der zweite Hochlastdrucktank zum Einsatz kommen, der dann die Versorgung der Antriebseinheit 11 auch bei Volllast und - wenn die Antriebseinheit eine Brennkraftmaschine ist - bei sehr hohen Drehzahlen sicher stellt.

## Patentansprüche

1. Verfahren zum Betreiben einer mit gasförmigem Brennstoff betriebenen Antriebseinheit (11), wobei der gasförmige Brennstoff unter hohem Druck in einer Vielzahl von Drucktanks (3; 3a; 3b; 3c) bereitgestellt wird, die über eine Versorgungsleitung (7) und mit einem Dosierventil (12) verbindbar sind, über das der gasförmige Brennstoff an die Antriebseinheit (11) abgegeben werden kann,
**dadurch gekennzeichnet,**
**dass** einer der Drucktanks als Hochlast-Drucktank (3) ausgebildet ist, der nur bei hoher Last der Antriebseinheit (11) mit der Versorgungsleitung (7) verbunden wird, wobei gleichzeitig die Drucktanks (3a; 3b; 3c), in denen ein niedrigerer Gasdruck als im Hochlast-Drucktank (3) herrscht, von der Versorgungsleitung (7) getrennt werden.

2. Verfahren nach einem der Anspruch 1, **dadurch gekennzeichnet, dass** der Hochlast-Drucktank (3) nur dann mit der Versorgungsleitung (7) verbunden wird, wenn der Gasdruck in den restlichen Drucktanks (3a; 3b; 3c) für die Versorgung der Antriebseinheit (11) bei hoher Last nicht mehr ausreichend ist.

3. Verfahren nach Anspruch 1 oder 2, **dadurch gekennzeichnet, dass** jeder der Drucktanks (3; 3a; 3b; 3c) mit der Versorgungsleitung (7) über eine Anschlussleitung (4; 4a; 4b; 4c) verbindbar ist, wobei in jeder Anschlussleitung (4; 4a; 4b; 4c) ein Absperrventil (5; 5a; 5b; 5c) angeordnet ist.

4. Verfahren nach Anspruch 3, **dadurch gekennzeichnet, dass** die Absperrventile (5; 5a; 5b; 5c) elektrisch steuerbar sind.

5. Verfahren nach einem der Ansprüche 1 bis 4, **dadurch gekennzeichnet, dass** mehrere Hochlast-Drucktanks (3) vorhanden sind, von denen wenigstens einer bei hoher Last der Antriebseinheit (11) mit der Versorgungsleitung (7) verbunden wird.

6. Verfahren nach Anspruch 5, **dadurch gekennzeichnet, dass** stets alle Hochlast-Drucktanks (3) gemeinsam mit der Versorgungsleitung (7) verbunden werden.

7. Verfahren nach Anspruch 5, **dadurch gekennzeichnet, dass** bei hoher Last der Antriebseinheit (11) nur einer der Hochlast-Drucktanks (3) mit der Versorgungsleitung (7) verbunden wird, solange, bis dieser Hochlast-Drucktank (3) den gleichen Gasdruck wie die restlichen Drucktank (3a; 3b; 3c) aufweist, und anschließend der nächste Hochlast-Drucktank (3) bei hoher Last der Antriebseinheit (11) mit der Versorgungsleitung (7) verbunden wird.

8. Verfahren nach einem der Ansprüche 1 bis 7, **dadurch gekennzeichnet, dass** die mit gasförmigem Brennstoff betriebene Antriebseinheit (11) ein Verbrennungsmotor oder eine Brennstoffzelle mit einem durch die Brennstoffzelle gespeisten Elektromotor ist.

9. Verfahren nach einem der Ansprüche 1 bis 8, **dadurch gekennzeichnet, dass** in der Versorgungsleitung (7) zwischen den Drucktanks (3; 3a; 3b; 3c) und dem Dosierventil (12) ein Druckminderer (10) angeordnet ist.

10. Verfahren nach einem der Ansprüche 1 bis 9, **dadurch gekennzeichnet, dass** mehrere Dosierventile (12) an die Versorgungsleitung (7) angeschlossen sind.

## Claims

1. Method for operating a drive unit (11) which is operated with gaseous fuel, wherein the gaseous fuel is provided at high pressure in a plurality of pressure tanks (3; 3a; 3b; 3c), which are connectable via a supply line (7) and to a dosing valve (12) via which the gaseous fuel can be delivered to the drive unit (11),
**characterized**
**in that** one of the pressure tanks is configured as a high-load pressure tank (3), which is connected to the supply line (7) only in the case of high load of the drive unit (11), wherein at the same time the pressure tanks (3a; 3b; 3c) in which there prevails a lower gas pressure than in the high-load pressure tank (3) are disconnected from the supply line (7).

2. Method according to Claim 1, **characterized in that** the high-load pressure tank (3) is connected to the supply line (7) only if the gas pressure in the remaining pressure tanks (3a; 3b; 3c) is no longer sufficient for providing a supply to the drive unit (11) at high load.

3. Method according to Claim 1 or 2, **characterized in that** each of the pressure tanks (3; 3a; 3b; 3c) is connectable to the supply line (7) via a connection line (4; 4a; 4b; 4c), wherein a shut-off valve (5; 5a; 5b; 5c) is arranged in each connecting line (4; 4a; 4b; 4c).

4. Method according to Claim 3, **characterized in that** the shut-off valves (5; 5a; 5b; 5c) are electrically controllable.

5. Method according to one of Claims 1 to 4, **characterized in that** multiple high-load pressure tanks (3), of which at least one is connected to the supply line (7) in the case of high load of the drive unit (11), are present.

6. Method according to Claim 5, **characterized in that** all the high-load pressure tanks (3) are at all times jointly connected to the supply line (7).

7. Method according to Claim 5, **characterized in that**, in the case of high load of the drive unit (11), only one of the high-load pressure tanks (3) is connected to the supply line (7), until this high-load pressure tank (3) has the same gas pressure as the remaining pressure tanks (3a; 3b; 3c), and then the next high-load pressure tank (3) is connected to the supply line (7) in the case of high load of the drive unit (11).

8. Method according to one of Claims 1 to 7, **characterized in that** the drive unit (11) operated with gaseous fuel is an internal combustion engine or a fuel cell with an electric motor fed by the fuel cell.

9. Method according to one of Claims 1 to 8, **characterized in that** a pressure reducer (10) is arranged in the supply line (7) between the pressure tanks (3; 3a; 3b; 3c) and the dosing valve (12).

10. Method according to one of Claims 1 to 9, **characterized in that** multiple dosing valves (12) are connected to the supply line (7).

## Revendications

1. Procédé pour faire fonctionner une unité d'entraînement (11) alimentée par un combustible gazeux, le combustible gazeux étant fourni sous haute pression dans une pluralité de réservoirs sous pression (3 ; 3a ; 3b ; 3c) qui sont aptes à être reliés par une conduite d'alimentation (7) à une vanne de dosage (12) par l'intermédiaire de laquelle le combustible gazeux est apte à être délivré à l'unité d'entraînement (11),
**caractérisé**
**en ce qu'**un des réservoirs sous pression est conçu sous la forme d'un réservoir sous pression à charge élevée (3) qui n'est relié à la conduite d'alimentation (7) que lorsque l'unité d'entraînement (11) est soumise à une charge élevée, les réservoirs sous pression (3a ; 3b ; 3c), dans lesquels règne une pression de gaz inférieure à celle du réservoir de pression à forte charge (3), étant simultanément séparés de la conduite d'alimentation (7).

2. Procédé selon la revendication 1, **caractérisé en ce que** le réservoir sous pression à forte charge (3) n'est relié à la conduite d'alimentation (7) que lorsque la pression de gaz dans les autres réservoirs sous pression (3a ; 3b ; 3c) n'est plus suffisante pour alimenter l'unité d'entraînement (11) en cas de charge élevée.

3. Procédé selon la revendication 1 ou la revendication 2, **caractérisé en ce que** chacun des réservoirs sous pression (3 ; 3a ; 3b ; 3c) est apte à être relié à la conduite d'alimentation (7) par l'intermédiaire d'une conduite de raccordement (4 ; 4a ; 4b ; 4c), une vanne d'arrêt (5 ; 5a ; 5b ; 5c) étant agencée dans chaque conduite de raccordement (4 ; 4a ; 4b ; 4c).

4. Procédé selon la revendication 3, **caractérisé en ce que** les vannes d'arrêt (5 ; 5a ; 5b ; 5c) sont commandables électriquement.

5. Procédé selon l'une des revendications 1 à 4, **caractérisé en ce que** sont présents plusieurs réservoirs sous pression à forte charge (3) dont au moins un est relié à la conduite d'alimentation (7) lorsque l'unité d'entraînement (11) est soumise à une charge élevée.

6. Procédé selon la revendication 5, **caractérisé en ce que** tous les réservoirs sous pression à forte charge (3) sont toujours reliés ensemble à la conduite d'alimentation (7).

7. Procédé selon la revendication 5, **caractérisé en ce que**, lorsque l'unité d'entraînement (11) est soumise à une charge élevée, seul l'un des réservoirs sous pression à charge élevée (3) est relié à la conduite d'alimentation (7) jusqu'à ce que ce réservoir sous pression à charge élevée (3) ait la même pression de gaz que les autres réservoirs sous pression (3a ; 3b ; 3c) et le réservoir sous pression à charge élevée (3) suivant est ensuite relié à la conduite d'alimentation (7) lorsque l'unité d'entraînement (11) est soumise à une charge élevée.

8. Procédé selon l'une des revendications 1 à 7, **caractérisé en ce que** l'unité d'entraînement (11) fonctionnant avec un combustible gazeux est un moteur à combustion ou une pile à combustible avec un moteur électrique alimenté par la pile à combustible.

9. Procédé selon l'une des revendications 1 à 8, **caractérisé en ce qu'**un réducteur de pression (10) est agencé dans la conduite d'alimentation (7) entre les réservoirs sous pression (3 ; 3a ; 3b ; 3c) et la vanne de dosage (12).

10. Procédé selon l'une des revendications 1 à 9, **caractérisé en ce que** plusieurs vannes de dosage (12) sont raccordées à la conduite d'alimentation (7).
